# EUROPEAN PATENT SPECIFICATION

(11) **EP 2 253 827 B1**
(45) Date of publication and mention of the grant of the patent: **09.05.2012**
(21) Application number: 10162796.6
(22) Date of filing: 13.05.2010
(51) Int. Cl.: F02M 21/02

(54) **Electromagnetic fuel injector**
Elektromagnetische Kraftstoffeinspritzdüse
Injecteur de carburant électromagnétique

(30) Priority: 13.05.2009 IT BO20090307
(43) Date of publication of application: 24.11.2010
(73) Proprietor: Magneti Marelli S.p.A., Corbetta (MI) (IT)
(72) Inventor: Petrecchia, Stefano, 06034 Foligno (IT); Cobianchi, Andrea, 40133 Bologna (IT); Cristiani, Marcello, 40026 Imola (IT)
(74) Representative: Jorio, Paolo

(56) References cited:
- WO-A1-2005/043016
- DE-A1-102006 006 886
- DE-A1-102007 002 841
- DE-A1-102007 004 560
- DE-A1-102007 031 306
- US-A1- 2008 135 020

## Description

### TECHNICAL SECTOR

The present invention relates to an electromagnetic fuel injector.

### PRIOR ART

The patent application No. EP08425280.8 (EP2112366A1) describes an electromagnetic fuel injector for gaseous fuels, comprising a tubular housing body, defined in which is an injection chamber delimited on one side by an injection nozzle, which is regulated by an injection valve governed by an electromagnetic actuator. The injection valve is provided with an open/close element, which is rigidly connected to a mobile anchor of the electromagnetic actuator for being displaced by the action of the electromagnetic actuator itself between a closing position and an opening position of the injection nozzle against the action of a closing spring that tends to keep the open/close element in the closing position.

The injection valve comprises a closing disk, which is entirely made of metal, is laterally welded to the tubular body, closes the injection chamber at the bottom, and has a central through hole that defines the injection nozzle. Jutting out from a bottom surface of the open/close element facing the closing disk are an inner ring having a diameter that is slightly greater than that of the central through hole of the closing disk, and an outer ring set on the outer rim of the open/close element. The inner ring defines a sealing element, which is designed to insulate the injection nozzle when the open/close element is set in the closing position resting against the closing disk; the outer ring has the function of absorbing part of the impact of the open/close element against the closing disk, thus preserving the integrity of the inner ring, which must have a high planarity to guarantee optimal tightness.

To increase the rate of fuel that flows through the injection nozzle when the injection valve is open, it has been proposed to increase the size (and hence the area) of the through hole made through the closing disk. However, if the size of the through hole made through the closing disk is increased, the hydraulic/pneumatic force (hydraulic, if the fuel is liquid; pneumatic, if the fuel is gaseous) that pushes the open/close element against the closing disk when the injection valve is closed and is generated by the difference of pressure present between the inside and the outside of the injection chamber, increases. Consequently, if the size of the through hole made through the closing disk is increased, it is necessary to increase the electromagnetic force generated by the electromagnetic actuator; i.e., it is necessary to increase the size, weight, cost, and consumption of electrical energy of the electromagnetic actuator.

To increase the rate of fuel that flows through the injection nozzle when the injection valve is open, it is also possible to increase the pressure of supply of the fuel given the same size of the through hole made through the closing disk. However, if the pressure of supply of the fuel is increased, the hydraulic/pneumatic force that pushes the open/close element against the closing disk when the injection valve is closed and is generated by the difference of pressure present between the inside and the outside of the injection chamber increases. Consequently, if also the pressure of supply of the fuel increases, it is necessary to increase the electromagnetic force generated by the electromagnetic actuator with the negative consequences described above.

DE102007031306A1 discloses a gas injecting valve for injecting gaseous medium. The gas injecting valve has a valve closing unit that frees or seals a passage at a valve sealing seat having a sealing area which is made of plastic and is fixed in a base area manufactured from a metallic material. In particular, DE102007031306A1 discloses an electromagnetic fuel injector according to the preamble of independent claim 1. Also DE 10 2006 006886 A1 and WO 2005/043016 A1 disclose gas injection valves according to the preamble of claim 1.

### DESCRIPTION OF THE INVENTION

The aim of the present invention is to provide an electromagnetic fuel injector, said injector being free from the drawbacks described above and at the same time being easy and economically advantageous to produce.

According to the present invention, an electromagnetic fuel injector is provided according to what is claimed in the annexed claims.

### BRIEF DESCRIPTION OF THE DRAWINGS

The present invention will now be described with reference to the annexed drawings, which illustrate a non-limiting example of embodiment thereof and in which:
- Figure 1 is a schematic lateral cross section, with parts removed for reasons of clarity, of an electromagnetic fuel injector made in accordance with the present invention;
- Figure 2 illustrates at an enlarged scale an injection valve of the electromagnetic fuel injector of Figure 1;
- Figure 3 is a perspective view at an enlarged scale of a closing disk of the injection valve of Figure 2;
- Figure 4 is a view in lateral cross section and at an enlarged scale of the closing disk of Figure 3;
- Figure 5 is a plan view and at an enlarged scale of an open/close element of the injection valve of Figure 2;
- Figure 6 is a cross-sectional view according to the line VI-VI of the open/close element of Figure 5; and
- Figure 7 is a cross-sectional view according to the line VII-VII of the open/close element of Figure 5.

### PREFERRED EMBODIMENTS OF THE INVENTION

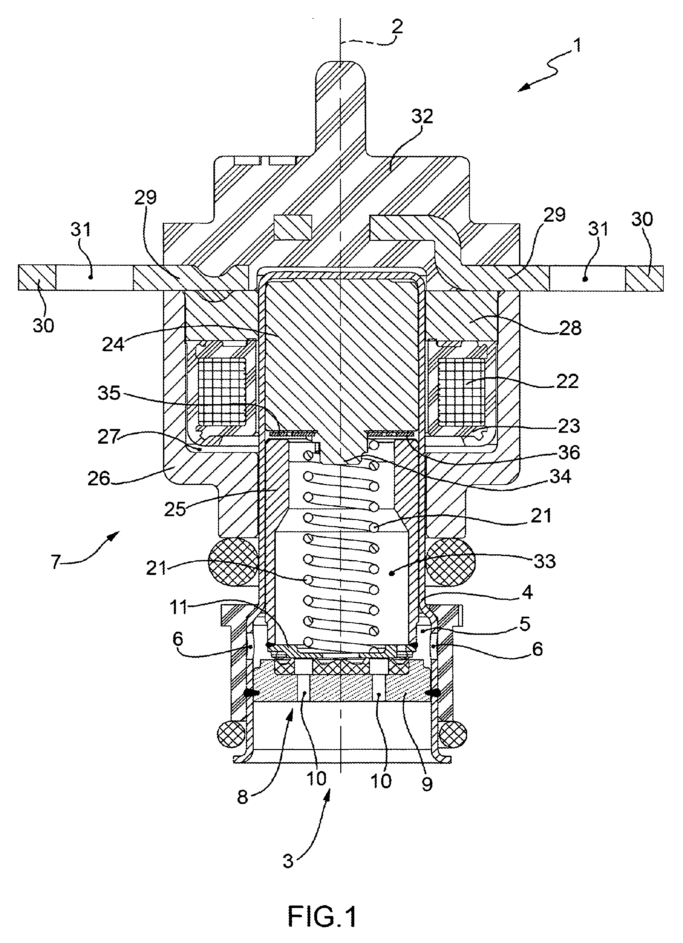

In Figure 1, the reference number 1 designates as a whole a fuel injector, which has a substantially cylindrical symmetry about a longitudinal axis 2 and is governed for injecting fuel from an injection nozzle 3. As will be described more fully hereinafter, the fuel injector 1 receives the fuel radially (i.e., in a direction perpendicular to the longitudinal axis 2) and injects the fuel axially (i.e., along the longitudinal axis 2).

The fuel injector 1 comprises a tubular body 4, which is closed at the top, is made by an operation of drawing of ferromagnetic steel, and has a cylindrical seat 5 that performs in its bottom portion the function of fuel pipe. In particular, in a bottom portion thereof the tubular body 4 has six radial supply through holes 6, which are set in a direction perpendicular to the longitudinal axis 2, are uniformly distributed about the longitudinal axis 2, and have the function of enabling radial inlet of the fuel into the cylindrical seat 5.

The supporting body 4 houses in a top portion thereof an electromagnetic actuator 7 and houses in a bottom portion thereof an injection valve 8, which delimits at the bottom the cylindrical seat 5; in use, the injection valve 8 is operated by the electromagnetic actuator 7 for regulating the flow of fuel through the injection nozzle 3, which is provided in a position corresponding to the injection valve 8 itself.

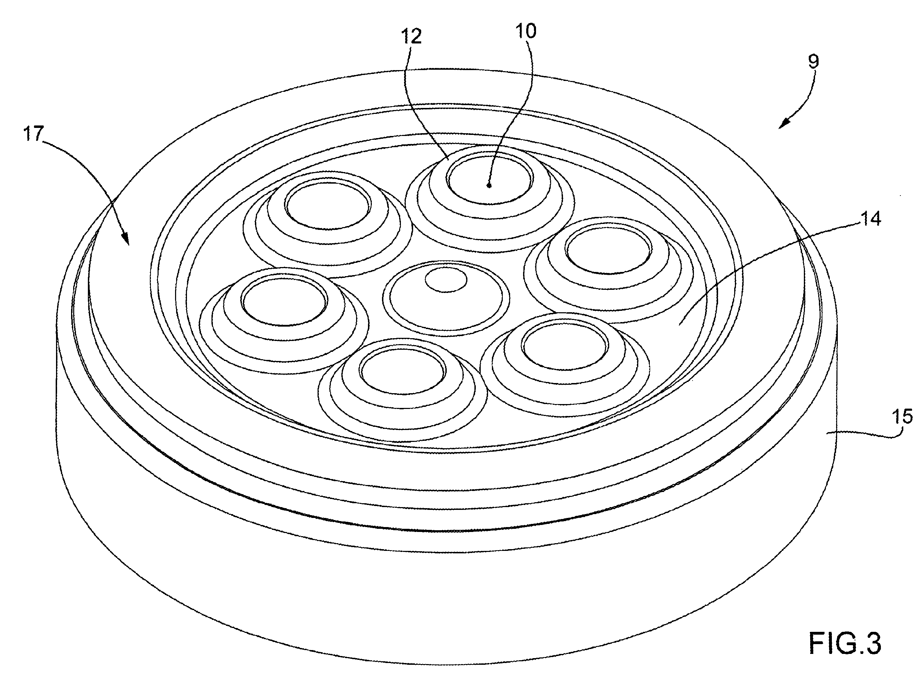

Set within the cylindrical seat 5 and underneath the radial supply holes 6 is a closing disk 9, which forms part of the injection valve 8, is laterally welded to the tubular body 4, and has six through holes 10 (visible in Figure 3) that define the injection nozzle 3; the six through holes 10 are symmetrically distributed about the longitudinal axis 2 and each have a circular shape. Coupled to the closing disk 9 is a disk-shaped open/close element 11 that forms part of the injection valve 8 and is mobile between an opening position, where the open/close element 11 is raised from the closing disk 9 and the injection nozzle 3 is in communication with the radial supply holes 6, and a closing position, where the open/close element 11 is pressed against the closing disk 9 and the injection nozzle 3 is isolated from the radial supply holes 6.

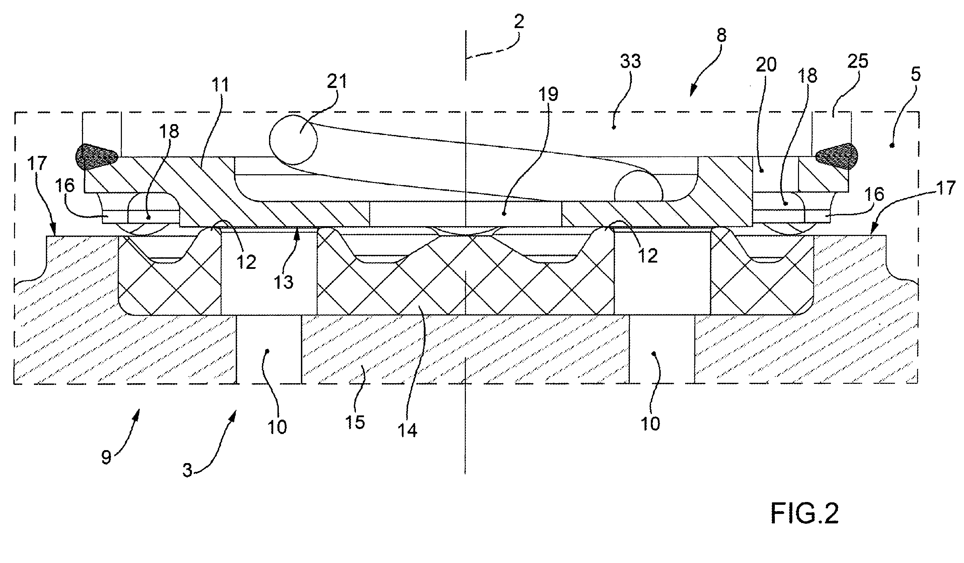

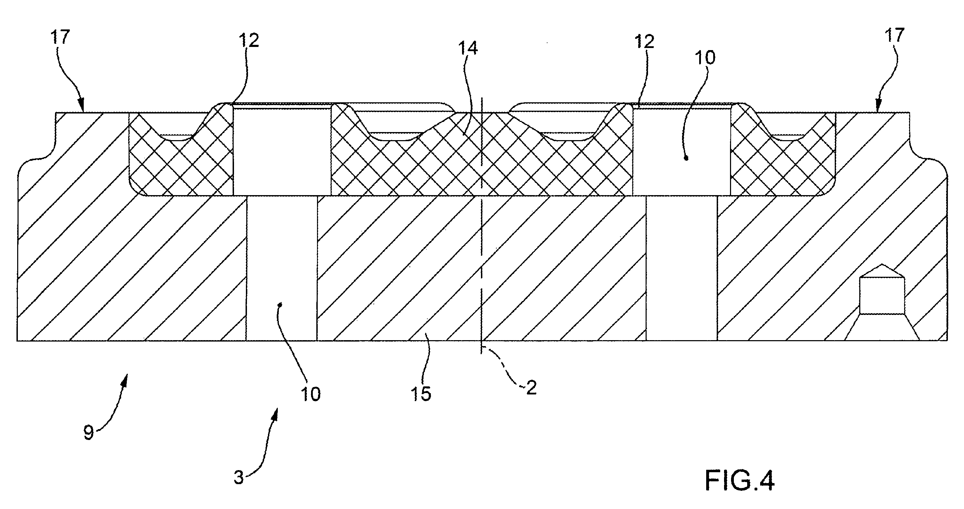

According to what is illustrated in Figures 2-4, present around each hole 10 is an annular sealing rim 12, which juts out from the closing disk 9, surrounds the hole 10, and has a diameter that is slightly greater than the diameter of the hole 10; in the closing position a bottom and central surface 13 of the open/close element 11 rests against the sealing rim 12 of each hole 10 isolating the hole 10 itself and thus preventing the fuel from flowing through the hole 10.

According to the invention, the closing disk 9 comprises an inner portion 14, which is made of elastic material (rubber or the like), constitutes a top part of the holes 10, and defines the sealing rims 12 around the holes 10, and an outer portion 15, which is made of metal material, houses within it the inner portion 14, is laterally welded to the tubular body 4, and defines a bottom part of the holes 10. Thanks to the fact that the sealing rims 12 around the holes 10 are made of elastic material, the open/close element 11, by resting on the sealing rims 12, in the closing position, determines an elastic deformation of the sealing rims 12 themselves that ensures a perfect sealing of the holes 10 compensating for possible constructional tolerances. As a result of the presence of the inner portion 14 made of elastic material that is able to undergo elastic deformation compensating for any constructional tolerances, it is possible to provide the closing disk 9 and the open/close element 11 with a lower constructional precision and hence involving lower production costs. Furthermore, the presence of the inner portion 14 made of elastic material that is compressed by the open/close element 11 during the movement of closing enables a considerable reduction of the rebound of the open/close element 11 against the closing disk 9, thus achieving a better control of the supply of the fuel.

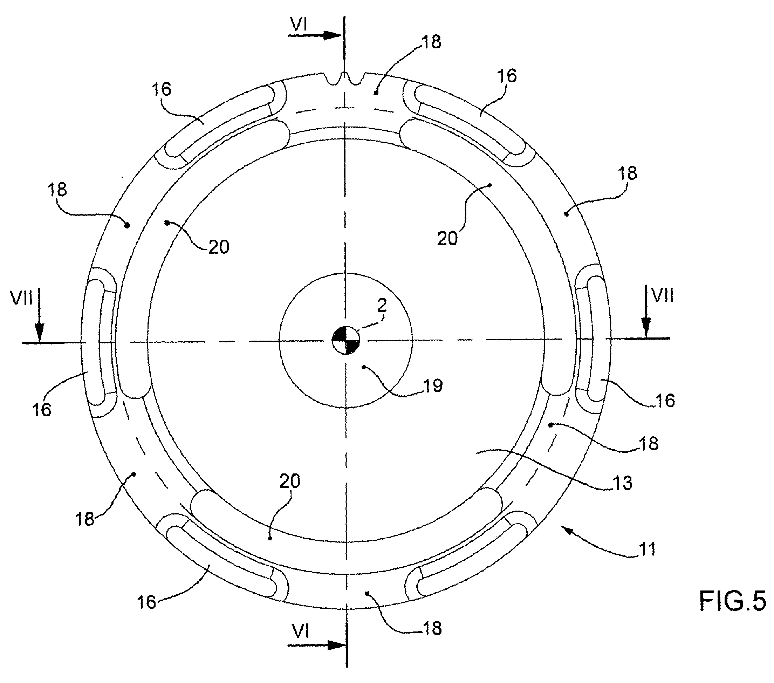

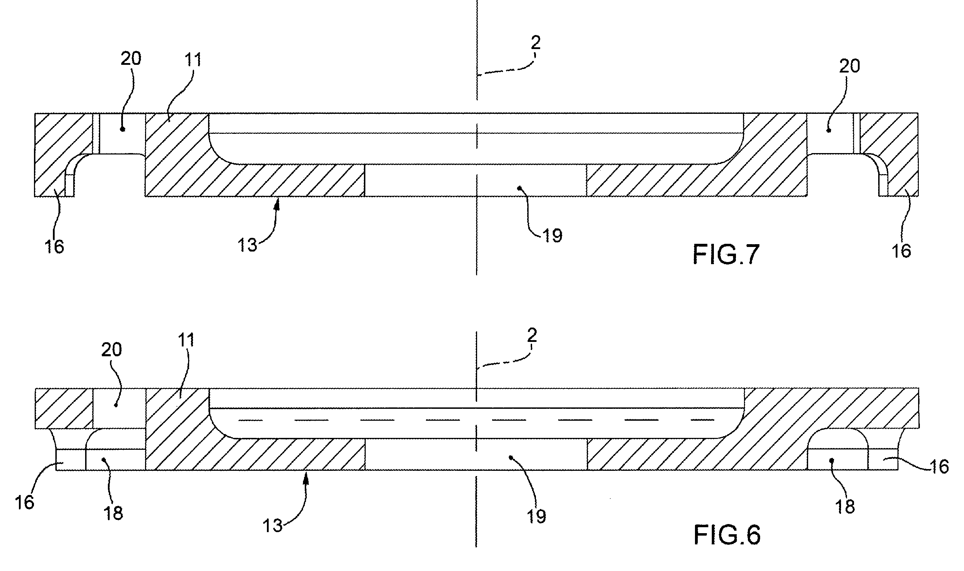

According to what is illustrated in Figures 5-7, the open/close element 11 has six resting feet 16, which are set symmetrically about the longitudinal axis 2 and on the outer periphery of the open/close element 11, and are shaped like the arc of a circumference. The function of the resting feet 16 is to rest against (i.e., in contact with) a top surface 17 of the closing disk 9 when, in the closing position, the open/close element 11 is pressed against the closing disk 9. According to a preferred embodiment, the resting feet 16 rest on the top surface 17 of the outer portion 15 of the closing disk 9, which is made of metal material and is thus undeformable; consequently, the contact between the resting feet 16 of the open/close element 11 and the top surface 17 of the outer portion 15 of the closing disk 9 defines a bottom end-of-travel for the movement of the open/close element 11. In this embodiment, the contact of the bottom and central surface 13 of the open/close element 11 against the sealing rims 12 occurs before the contact of the resting feet 16 against the top surface 17 of the outer portion 15 in such a way as to guarantee that, before the movement downwards of the open/close element 11 is stopped by the contact of the resting feet 16 against the top surface 17 of the outer portion 15, the bottom and central surface 13 has adequately compressed the sealing rims 12; said result can be obtained in multiple ways, i.e., causing the sealing rims 12 to project (typically by approximately 0.1 mm) from the top surface 17 of the outer portion 15 and/or causing the bottom and central surface 13 to project from the resting feet 16.

It should be noted that, thanks to the presence of the resting feet 16 that define a bottom end-of-travel for the movement of the open/close element 11, the compression to which the inner portion 14 of the closing disk 9 is subjected is fixed and can be pre-set. In this way, it is guaranteed that the inner portion 14 of the closing disk 9 is never compressed excessively (i.e., beyond the limits of elasticity) and hence is not subject to early wear.

The open/close element 11 has a plurality of resting feet 16, set at a distance from one another, instead of a single continuous annular resting foot, in such a way as to have, between two resting feet 16 set alongside one another, a port 18 to enable a flow of fuel through the radial supply holes 6 of the tubular body 4 towards the through holes 10 that define the injection nozzle 3. In other words, defined between the resting feet 16 are six ports 18 for enabling the fuel to flow from the radial supply holes 6 of the tubular body 4 to the through holes 10 that define the injection nozzle 3.

According to a preferred embodiment, the open/close element 11 comprises a central through hole 19 of a circular shape and three side through holes 20 shaped like the arc of a circumference and set symmetrically about the longitudinal axis 2 so as to be set between the resting feet 16 and the bottom and central surface 13. The main function of the holes 19 and 20 is to guarantee an adequate supply of fuel to the through holes 10 that together define the injection nozzle 3. Another function of the holes 19 and 20 is to enable an axial movement of the open/close element 11 without generating a hydraulic/pneumatic resistance by the fuel (hydraulic if the fuel is liquid, pneumatic if the fuel is gaseous). In other words, during the axial movement of the open/close element 11, the fuel can flow freely from one part to the other of the open/close element 11 through the holes 19 and 20 without generating on the open/close element 11 a significant hydraulic/pneumatic resistance. A further function of the holes 19 and 20 is to lighten the open/close element 11 so as to reduce the weight, and hence the mechanical inertia, of the open/close element 11 itself.

According to what is illustrated in Figure 1, the open/close element 11 is kept in the closing position resting against the closing disk 9 by a closing spring 21, which is compressed between a top surface of the open/close element 11 and a top wall of the tubular body 4. The electromagnetic actuator 7 is governed to displace the open/close element 11 from the closing position to the opening position against the action of the closing spring 21.

The electromagnetic actuator 7 comprises a coil 22, which is set externally around the tubular body 4 and is enclosed in a toroidal case 23 made of plastic material, and a fixed magnetic pole 24, which is made of ferromagnetic material and is set within the tubular body 4 in a position corresponding to the coil 22. Furthermore, the electromagnetic actuator 7 comprises a mobile anchor 25, which has a cylindrical shape, is made of ferromagnetic material, is mechanically connected to the open/close element 11, and is designed to be magnetically attracted by the magnetic pole 24 when the coil 22 is energized (i.e., traversed by current). Finally, the electromagnetic actuator 7 comprises a tubular magnetic armature 26, which is made of ferromagnetic material, is set on the outside of the tubular body 4, and comprises an annular seat 27 for housing within it the coil 22, and a magnetic washer 28 of an annular shape, which is made of ferromagnetic material and is set above the coil 22 to guide closing of the magnetic flux around the coil 22 itself. Located above the magnetic washer 28 and around the tubular body 4 is a metal clamping ring 29, which keeps the magnetic washer 28 and the coil 22 in position, preventing the magnetic washer 28 and the coil 22 from sliding out of the tubular body 4. Preferably, the clamping ring 29 has two lateral expansions 30, each of which is traversed by a through hole 31 and is used for the mechanical fixing of the fuel injector 1.

Comoulded on top of the clamping ring 29 is a cap 32 made of plastic material, provided on which is an electrical connector (not illustrated) having the function of providing the electrical connection between the coil 22 of the electromagnetic actuator 7 and an external electronic control unit (not illustrated).

The anchor 25 has a tubular shape and is welded at the bottom to the open/close element 11 on the outer rim of the open/close element 11 itself. Preferably, the closing spring 21 is set through a central through opening 33 of the anchor 25, rests at the bottom on a top surface of the open/close element 11, and at a top end thereof is fitted in a cylindrical protuberance 34 set at the centre of the magnetic pole 24.

In use, when the electromagnetic actuator 7 is de-energized, the anchor 25 is not attracted by the magnetic pole 24, and the elastic force of the closing spring 21 pushes the anchor 25 together with the open/close element 11 downwards and against the closing disk 9; in this situation, the open/close element 11 is pressed against the closing disk 9 preventing outflow of the fuel from the injection nozzle 3. When the electromagnetic actuator 7 is energized, the anchor 25 is magnetically attracted by the magnetic pole 24 against the elastic force of the closing spring 21, and the anchor 25, together with the open/close element 11, displaces upwards until it bangs against the magnetic pole 24; in this condition, the open/close element 11 is raised from the closing disk 9 and the pressurized fuel can flow through the injection nozzle 3.

Preferably, the fuel injector 1 comprises an absorption element 35, which has the shape of a disk perforated at the centre, is made of (resilient) amagnetic elastic material having a high degree of elasticity (typically rubber or the like), and is set between the magnetic pole 24 itself and the anchor 25 (in particular is slid into the central protuberance 34 of the magnetic pole 24). Furthermore, the fuel injector 1 comprises a protection element 36, which has the shape of a centrally perforated disk, is made of magnetic metal material having a high surface hardness (for example, hardened magnetic steel), and is set between the absorption element 35 and the anchor 25 (in particular, is slid in the central protuberance 34 of the magnetic pole 24). By way of example, the absorption element 35 has a thickness in the region of 100 µm, whilst the protection element 36 has a thickness in the region of 300 µm.

The function of the absorption element 35 is to absorb the kinetic energy of the anchor 25 when the anchor 25 displaces from the closing position to the opening position and impacts against the magnetic pole 24 in such a way as to limit the mechanical stresses on these components. In addition, the function of the absorption element 35 is to prevent magnetic sticking of the anchor 25 to the magnetic pole 24, always maintaining a minimum air-gap between the anchor 25 and the magnetic pole 24. The function of the protection element 36 is to protect the absorption element 35 from impact of the anchor 25 so as to prevent an early wear of the absorption element 35 itself. In other words, when the anchor 25 displaces from the closing position to the opening position, it does not impact directly against the absorption element 35, but impacts against the protection element 36, which in turn transmits the energy of the impact to the absorption element 35.

Preferably, an external cylindrical surface of the anchor 25 and a top annular surface of the anchor 25 are coated by a chrome layer (indicatively having a thickness of 20-30 µm); it should be emphasized that chrome is an amagnetic metal, has a low coefficient of friction to sliding (less than half that of steel) and at the same time has a high surface hardness. The function of the chrome layer on the top annular surface of the anchor 25 is to increase the surface hardness locally to withstand better impact of the anchor 25 against the magnetic pole 24 (or rather against the protection element 36). The function of the layer of chrome on the external cylindrical surface of the anchor 25 is both to facilitate sliding of the anchor 25 with respect to the tubular body 4, and to uniform the lateral air-gap (always maintaining a minimum air-gap between the anchor 25 and the annular body 4) so as to prevent any lateral magnetic sticking and so as to balance the radial magnetic forces.

According to a preferred embodiment, the open/close element 11 is made of elastic steel and has a small thickness so as to be able to undergo elastic deformation at the centre; in this connection, it should be emphasized that the open/close element 11 is welded to the anchor 25 only along its own outer rim and hence can undergo elastic deformation at the centre. Said elastic deformability of the open/close element 11 enables recovery of any possible clearance or constructional tolerances without jeopardizing optimal tightness of the open/close element 11 itself.

The injector 1 described above presents numerous advantages, in so far as it is simple and economically advantageous to produce and above all, when the injection valve 8 is open, it enables supply through the injection nozzle 3 of a high flowrate of fuel albeit presenting, when the injection valve 8 is closed, a reduced hydraulic/pneumatic force (hydraulic if the fuel is liquid, pneumatic if the fuel is gaseous), which pushes the open/close element 11 against the closing disk 9 as a result of the difference in pressure between the inside and the outside of the seat 5.

The above result is obtained thanks to the fact that the injection nozzle 3 is constituted by a plurality of through holes 10, each of which is surrounded by a corresponding annular seal rim 12, which has a diameter that is slightly greater than the diameter of the hole 10 itself. In fact, it has been noted that, if the overall section of passage of the injection nozzle 3 is divided into a number of through holes 10, instead of being concentrated in a single through hole set at the centre, it is possible to increase the rate of fuel that flows through the injection nozzle 3 when the injection valve 8 is open, at the same time maintaining the hydraulic/pneumatic force that pushes the open/close element 11 against the closing disk 9 when the injection valve 8 is closed unvaried. In other words, the hydraulic/pneumatic force that pushes the open/close element 11 against the closing disk 9 when the injection valve 8 is closed is directly proportional to the overall section of seal provided by the annular sealing rim 12 and to the difference in pressure across the injection nozzle 3, and with the use of a number of through holes 10 of smaller cross section the overall area of passage is greater than the area of passage of a single through hole given the same overall sealing section (i.e., given the same hydraulic/pneumatic force that pushes the open/close element 11 against the closing disk 9 when the injection valve 8 is closed).

## Claims

1. An electromagnetic fuel injector (1) comprising:
a tubular body (4), which has a cylindrical seat (5) that performs the function of fuel pipe;
an injection nozzle (3), which is set at the end of the cylindrical seat (5) and is regulated by an injection valve (8) ;
a closing disk (9), which forms part of the injection valve (8), is laterally fixed to the tubular body (4), and has a plurality of through holes (10) that together define the injection nozzle (3);
a mobile open/close element (11), which forms part of the injection valve (8) and is mobile away from/towards the closing disk (9) for regulating the flow of fuel; and
an electromagnetic actuator (7), which displaces the open/close element (11) between a closing position and an opening position of the injection valve (8);
wherein present around each hole (10) is an annular sealing rim (12), which juts out from the closing disk (9), surrounds the hole (10), and in the closing position is in contact with a bottom surface (13) of the open/close element (11); and
wherein the open/close element (11) comprises a plurality of resting feet (16), which are set on the outer periphery of the open/close element (11) to rest against a top surface (17) of the closing disk (9) when, in the closing position, the open/close element (11) is pressed against the closing disk (9) ;
the injector (1) is **characterized in that** the closing disk (9) comprises:
an inner portion (14), which is made of elastic material,
defines a top part of the through holes (10), and defines the sealing rims (12) around the holes (10) themselves; and
an outer portion (15), which is made of metal material, houses within it the inner portion (14), is fixed laterally to the tubular body (4), defines a bottom part of the through holes (10), and has the top surface (17) that is in contact against the resting feet (16) of the open/close element (11).

2. The injector (1) according to Claim 1, wherein the through holes (10) through the closing disk (9) are symmetrically distributed about a longitudinal axis (2).

3. The injector (1) according to Claim 1, wherein at least four through holes (10) are provided through the closing disk (9).

4. The injector (1) according to Claim 1, Claim 2, or Claim 3, wherein the closing disk (9) comprises:
an inner portion (14), which is made of elastic material,
defines a top part of the through holes (10), and defines the sealing rims (12) around the holes (10) themselves; and
an outer portion (15), which is made of metal material, houses within it the inner portion (14), is fixed laterally to the tubular body (4), and defines a bottom part of the through holes (10).

5. The injector (1) according to any one of Claims 1 to 4, wherein, during a movement of closing, a contact of a bottom and central surface (13) of the open/close element (11) against the sealing rims (12) occurs before a contact of the resting feet (16) against the top surface (17) of the outer portion (15) in such a way as to guarantee that, before the movement downwards of the open/close element (11) is stopped by the contact of the resting feet (16) against the top surface (17) of the outer portion (15), the bottom and central surface (13) has adequately compressed the sealing rims (12).

6. The injector (1) according to any one of Claims 1 to 5, wherein defined between the resting feet (16) of the open/close element (11) are respective ports (18) to enable a flow of fuel towards the through holes (10) that define the injection nozzle (3).

7. The injector (1) according to any one of Claims 1 to 6, wherein the open/close element (11) comprises a central through hole (19) of a circular shape and a series of lateral through holes (20) set symmetrically about the longitudinal axis (2).

8. The injector (1) according to any one of Claims 1 to 7, wherein the electromagnetic actuator (7) comprises:
a fixed magnetic pole (24);
a coil (22), designed to induce a magnetic flux in the magnetic pole (24);
a mobile anchor (25), designed to be magnetically attracted by the magnetic pole (24);
an absorption element (35), which is made of amagnetic elastic material and is set between the magnetic pole (24) and the anchor (25); and
a protection element (36), which is made of magnetic metal material that has a high surface hardness and is set between the absorption element (35) and the anchor (25).

9. The injector (1) according to Claim 8, wherein the magnetic pole (24) has a protuberance (34) set centrally; the absorption element (35) and the protection element (36) have the shape of a disk perforated at the centre and are fitted into the protuberance (34) set at the centre of the magnetic pole (24).

10. The injector (1) according to Claim 9 and comprising a closing spring (21), which is compressed between the open/close element (11) and the magnetic pole (24) for pushing the open/close element (11) into the closing position and has an end thereof fitted in the protuberance (34) of the magnetic pole (24).

11. The injector (1) according to any one of Claims 1 to 10, wherein in a bottom portion thereof the tubular body (4) has a number of radial supply through holes (6), which are set perpendicular to a longitudinal axis (2) of the tubular body (4) and have the function of enabling radial inlet of the fuel within the cylindrical seat (5).

## Patentansprüche

1. Elektromagnetische Kraftstoffeinspritzdüse (1) mit:
einem rohrförmigen Körper (4), der einen zylindrischen Sitz (5) hat, der die Funktion eines Kraftstoffrohrs hat;
einem Einspritzdüsenkopfteil (3), der an das Ende des zylindrischen Sitzes (5) gesetzt ist und von einem Einspritzventil (8) reguliert wird;
einer Schließscheibe (9), die Teil des Einspritzventils (8) ist, seitlich am rohrförmigen Körper (4) befestigt ist und eine Vielzahl von Durchgangslöchern (10) besitzt, die zusammen den Einspritzdüsenkopfteil (3) definieren;
einem beweglichen Öffnungs-/Schließelement (11), das Teil des Einspritzventils (8) ist und von/in Richtung der Schließscheibe (9) beweglich ist, um den Kraftstoffstrom zu regulieren; und
einem elektromagnetischen Stellorgan (7), welches das Öffnungs-/Schließelement (11) zwischen einer Schließstellung und einer Öffnungsstellung des Einspritzventils (8) verschiebt;
wobei um jedes Loch (10) ein ringförmiger, abdichtender Kranz (12) vorhanden ist, der von der Schließscheibe (9) vorspringt, das Loch (10) umgibt und in der Schließstellung eine untere Oberfläche (13) des Öffnungs-/Schließelements (11) berührt; und
wobei das Öffnungs-/Schließelement (11) eine Vielzahl von Auflagefüßen (16) aufweist, die an den äußeren Rand des Öffnungs-/Schließelements (11) angesetzt sind, um auf einer oberen Fläche (17) der Schließscheibe (9) aufzusitzen, wenn das Öffnungs-/Schließelement (11) in der Schließstellung gegen die Schließscheibe (9) gedrückt wird;
die Einspritzdüse (1) ist **dadurch gekennzeichnet, dass** die Schließscheibe (9) aufweist:
einen inneren Teil (14), der aus elastischem Material hergestellt ist, einen oberen Teil der Durchgangslöcher (10) definiert und die abdichtenden Kränze (12) um die Löcher (10) selbst definiert; und
einen äußeren Teil (15), der aus Metallmaterial hergestellt ist, in sich den inneren Teil (14) aufnimmt, seitlich am rohrförmigen Körper (4) befestigt ist, einen unteren Teil der Durchgangslöcher (10) definiert und die obere Fläche (17) besitzt, welche die Auflagefüße (16) des Öffnungs-/Schließelements (11) berührt.

2. Einspritzdüse (1) nach Anspruch 1, wobei die Durchgangslöcher (10) durch die Schließscheibe (9) symmetrisch um eine Längsachse (2) angeordnet sind.

3. Einspritzdüse (1) nach Anspruch 1, wobei mindestens vier Durchgangslöcher (10) durch die Schließscheibe (9) vorgesehen sind.

4. Einspritzdüse (1) nach Anspruch 1, Anspruch 2 oder Anspruch 3, wobei die Schließscheibe (9) aufweist:
einen inneren Teil (14), der aus elastischem Material hergestellt ist, einen oberen Teil der Durchgangslöcher (10) definiert und die abdichtenden Kränze (12) um die Löcher (10) selbst definiert; und
einen äußeren Teil (15) der aus Metallmaterial hergestellt ist, in sich den inneren Teil (14) aufnimmt, seitlich am rohrförmigen Körper (4) befestigt ist und einen unteren Teil der Durchgangslöcher (10) definiert.

5. Einspritzdüse (1) nach einem der Ansprüche 1 bis 4, wobei es während einer Schließbewegung vor einer Berührung der Auflagefüße (16) mit der oberen Fläche (17) des äußeren Teils (15) zu einer Berührung einer unteren und mittigen Oberfläche (13) des Öffnungs-/Schließelements (11) mit den abdichtenden Kränzen (12) kommt dergestalt, dass gewährleistet ist, dass, bevor die Abwärtsbewegung des Öffnungs-/Schließelements (11) durch die Berührung der Auflagefüße (16) mit der oberen Fläche (17) des äußeren Teils (15) gestoppt wird, die untere und mittige Oberfläche (13) die abdichtenden Kränze (12) ausreichend zusammengedrückt hat.

6. Einspritzdüse (1) nach einem der Ansprüche 1 bis 5, wobei zwischen den Auflagefüßen (16) des Öffnungs-/Schließelements (11) entsprechende Öffnungen (18) definiert werden, um einen Kraftstoffstrom in Richtung der den Einspritzdüsenkopfteil (3) definierenden Durchgangslöcher (10) zu erlauben.

7. Einspritzdüse (1) nach einem der Ansprüche 1 bis 6, wobei das Öffnungs-/Schließelement (11) ein mittiges Durchgangsloch (19) von einer Kreisform und eine Reihe seitlicher Durchgangslöcher (20), die symmetrisch um die Längsachse (2) angeordnet sind, aufweist.

8. Einspritzdüse (1) nach einem der Ansprüche 1 bis 7, wobei das elektromagnetische Stellorgan (7) aufweist:
einen festen magnetischen Pol (24);
eine Spule (22), die dazu ausgelegt ist, im magnetischen Pol (24) einen magnetischen Fluss zu induzieren;
einen beweglichen Anker (25), der dazu ausgelegt ist, vom magnetischen Pol (24) magnetisch angezogen zu werden;
ein Absorptionselement (35), das aus amagnetischem, elastischem Material hergestellt und zwischen dem magnetischen Pol (24) und dem Anker (25) angeordnet ist; und
ein Schutzelement (36), das aus magnetischem Metallmaterial hergestellt ist, welches eine hohe Oberflächenhärte besitzt und zwischen dem Absorptionselement (35) und dem Anker (25) angeordnet ist.

9. Einspritzdüse (1) nach Anspruch 8, wobei der magnetische Pol (24) einen mittig angeordneten Vorsprung (34) besitzt; das Absorptionselement (35) und das Schutzelement (36) haben die Form einer in der Mitte gelochten Scheibe und sind in dem in der Mitte des magnetischen Pols (24) angeordneten Vorsprung eingebracht.

10. Einspritzdüse (1) nach Anspruch 9 und mit einer Schließfeder (21), die zwischen dem Öffnungs-/Schließelement (11) und dem magnetischen Pol (24) zusammengedrückt wird, um das Öffnungs-/Schließelement (11) in die Schließstellung zu schieben, und deren eines Ende im Vorsprung (34) des magnetischen Pols (24) eingebracht ist.

11. Einspritzdüse (1) nach einem der Ansprüche 1 bis 10, wobei in einem unteren Teil davon der rohrförmige Körper (4) eine Anzahl radialer Zulaufdurchgangslöcher (6) besitzt, die senkrecht zu einer Längsachse (2) des rohrförmigen Körpers (4) angeordnet sind und die Aufgabe haben, einen radialen Eintritt des Kraftstoffs innerhalb des zylindrischen Sitzes (5) zu ermöglichen.

## Revendications

1. Injecteur de carburant électromagnétique (1) comprenant :
un corps tubulaire (4) qui possède un siège cylindrique (5) qui assure la fonction de conduit de carburant ;
une buse d'injection (3) qui est placée à l'extrémité du siège cylindrique (5) et est réglée par une soupape d'injection (8) ;
un disque de fermeture (9) et qui fait partie de la soupape d'injection (8), est fixé latéralement au corps tubulaire (4) et présente une pluralité de trous débouchants (10) qui définissent ensemble la buse d'injection (3) ;
un élément d'ouverture/fermeture mobile (11) qui fait partie de la soupape d'injection (8) et peut s'éloigner et se rapprocher du disque de fermeture (9) pour régler l'écoulement du carburant ; et
un actionneur électromagnétique (7) qui déplace l'élément d'ouverture/fermeture (11) entre une position de fermeture et une position d'ouverture de la soupape d'injection (8) ;
dans lequel se trouve autour de chaque trou (10) un rebord de fermeture annulaire (12) qui fait saillie sur le disque de fermeture (9), entoure le trou (10), et qui, dans la position de fermeture, est en contact avec une surface inférieure (13) de l'élément d'ouverture/fermeture (11) ; et
dans lequel l'élément d'ouverture/fermeture (11) comprend une pluralité de pieds d'appui (16) qui sont disposées sur la périphérie extérieure de l'élément d'ouverture/fermeture (11) pour reposer contre une surface supérieure (17) du disque de fermeture (9) lorsque, dans la position de fermeture, l'élément d'ouverture/fermeture (11) est pressé contre le disque de fermeture (9) ;
l'injecteur (1) est **caractérisé en ce que** le disque de fermeture (9) comprend :
une partie intérieure (14), qui est faite de matière élastique, définit une partie supérieure des trous débouchant (10), et définit les rebords d'étanchéité (12) autour des trous (10) ; et une partie extérieure (15) qui est faite d'une matière métallique, renferme intérieurement la partie intérieure (14), est fixée latéralement au corps tubulaire (4), définit une partie inférieure des trous débouchants (10) et présente une surface supérieure (17) qui est en contact avec les pieds d'appui (16) de l'élément d'ouverture/fermeture (11).

2. Injecteur (1) selon la revendication 1, dans lequel les trous débouchants (10) formés à travers le disque de fermeture (9) sont répartis symétriquement autour d'un axe longitudinal (2).

3. Injecteur selon la revendication 1, dans lequel au moins quatre trous débouchants (10) sont prévus à travers le disque de fermeture (9).

4. Injecteur (1) selon la revendication 1, la revendication 2, où la revendication 3, dans lequel le disque de fermeture (9) comprend :
une partie intérieure (14) qui est faite de matière élastique, définit une partie supérieure des trous débouchants (10) et définit les rebords d'étanchéité (12) autour des trous (10) ; et
une partie extérieure (15) qui est faite de matière métallique, renferme intérieurement la partie intérieure (14), est fixée latéralement au corps tubulaire (4) et définit une partie inférieure des trous débouchants (10).

5. Injecteur (1) selon une quelconque des revendications 1 à 4, dans lequel, pendant un mouvement de fermeture, un contact d'une surface inférieure et centrale (13) de l'élément d'ouverture/fermeture (11) contre les rebords d'étanchéité (12) se produit avant un contact des pieds d'appui (16) contre la surface supérieure (17) de la partie extérieure (15) de manière à garantir que, avant que le mouvement descendant de l'élément d'ouverture/fermeture (11) soit arrêté par le contact des pieds d'appui (16) contre la surface supérieure (17) de la partie extérieure (15), la surface inférieure et centrale (13) à convenablement comprimé les rebords d'étanchéité (12).

6. Injecteur (1) selon une quelconque des revendications 1 à 5, dans lequel, entre les pieds d'appui (16) de l'élément d'ouverture/fermeture (11) sont définis des orifices respectifs (18) servant à permettre un écoulement de carburant en direction des trous débouchants (10) qui définissent le la buse d'injection (3).

7. Injecteur (1) selon une quelconque des revendications 1 à 6, dans lequel l'élément d'ouverture/fermeture (11) comprend un trou débouchant central (19) de forme circulaire et une série de trous débouchants latéraux (20) disposées symétriquement autour de l'axe longitudinal (2).

8. Injecteur (1) selon une quelconque des revendications 1 à 7, dans lequel le l'actionneur électromagnétique (7) comprend :
un pôle magnétique fixe (24) ;
une bobine (22), conçue pour induire un flux magnétique dans le pôle magnétique (24) ;
une armature mobile (25), conçue pour être attirée magnétiquement par le pôle magnétique (24) ;
un élément d'absorption (35) qui est fait d'une matière amagnétique élastique et est placé entre le pôle magnétique (24) et l'armature (25) ; et
un élément de protection (36) qui est fait d'une matière métallique magnétique qui possède une haute dureté de surface et qui est placé entre l'élément d'absorption (35) et l'armature (25)

9. Injecteur (1) selon la revendication 8, dans lequel le pôle magnétique (24) présente une protubérance (34) placée au centre ; l'élément d'absorption (35) et l'élément de protection (36) ont la forme d'un disque perforé au centre et sont ajustés dans la protubérance (34) placée au centre du pôle magnétique (34)

10. Injecteur (1) selon la revendication 9 et comprenant un ressort de fermeture (21) qui est comprimé entre l'élément d'ouverture/fermeture (11) et le pôle magnétique (24) et sert à pousser l'élément d'ouverture/fermeture (11) dans la position de fermeture et a une de ses extrémités ajustée dans la protubérance (34) du pôle magnétique (24)

11. Injecteur (1) selon une quelconque des revendications 1 à 10, dans lequel, dans une partie inférieure, le corps tubulaire (4) présente un certain nombre de trous débouchants d'alimentation radiaux (6) qui sont disposés perpendiculairement à un axe longitudinal (2) du corps tubulaire (4) et ont la fonction de permettre l'entrée radiale du carburant dans le siège cylindrique (5).
